# FASCICULE DE BREVET EUROPEEN

(11) **EP 2 063 549 B1**
(45) Date de publication et mention de la délivrance du brevet: **25.05.2011**
(21) Numéro de dépôt: 08169669.2
(22) Date de dépôt: 21.11.2008
(51) Int. Cl.: H04B 7/15, H04N 7/10

(54) **Répéteur pour la retransmission à l'intérieur d'une habitation d'un signal radiodiffusé de type DVB-H**
Repeater zur Rückübertragung eines Funksignals vom Typ DVB-H in einer Wohnung
Repeater for retransmitting a broadcast DVB-H signal within a dwelling

(30) Priorité: 23.11.2007 FR 0759275
(43) Date de publication de la demande: 27.05.2009
(73) Titulaire: Bouygues Telecom, 75008 Paris (FR)
(72) Inventeur: Matillon, Philippe, 78120 Rambouillet (FR)
(74) Mandataire: Callon de Lamarck, Jean-Robert

(56) Documents cités:
- WO-A-98/59442
- US-A1- 2004 158 649
- US-A1- 2004 177 381

## Description

L'invention concerne un répéteur destiné à la retransmission d'un signal radiodiffusé à l'intérieur d'une habitation.

Elle trouve une application générale en télévision mobile personnelle pour la retransmission à l'intérieur d'une habitation d'un signal de type DVB-H (« Digital Video Broadcasting - Handheld »).

La réception « indoor », à l'intérieur d'une habitation, de signaux DVB-H par un terminal mobile peut ne pas s'avérer satisfaisante selon la localisation du terminal dans l'habitation et par le fait que le réseau de diffusion est essentiellement prévu pour une utilisation « nomade » du terminal mobile plutôt qu'une utilisation « sédentaire » cantonnée à l'intérieur d'une habitation.

Dans les réseaux de transmission hertzienne, il est connu de combler une zone d'ombre en utilisant localement un répéteur qui a pour fonction de capter, filtrer, amplifier puis retransmettre un signal hertzien.

On connaît en particulier des répéteurs dédiés au DVB-H comprenant un connecteur d'entrée pour le branchement du répéteur via un câble coaxial à une prise murale de l'habitation recevant le signal TV radiodiffusé depuis une antenne extérieure de toit, ainsi qu'une antenne qui réémet le signal DVB-H à l'intérieur de l'habitation.

Il a été proposé d'équiper un répéteur de ce type d'une sortie TV auxiliaire sous la forme d'une prise de sortie destinée au branchement du répéteur à un poste de réception TV via un câble coaxial. Cette sortie auxiliaire permet au répéteur d'assurer une fonction de relais du signal TV entre la prise murale et le poste de réception. Ce type de répéteur à sortie TV auxiliaire présente toutefois l'inconvénient de ne pouvoir fonctionner convenablement que lorsque le poste de réception TV est effectivement branché au répéteur. Lorsque la sortie auxiliaire est laissée en l'air, on constate effectivement une dégradation des performances de la réémission par l'antenne du répéteur du signal DVB-H à l'intérieur de l'habitation. L'invention a pour objectif de proposer un répéteur qui ne présente pas cet inconvénient, et propose à cet effet un répéteur pour la retransmission à l'intérieur d'une habitation d'un signal radiodiffusé conforme à la revendication 1.

Certains aspects préférés, mais non limitatifs, de ce répéteur sont énoncés dans les revendications dépendantes.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma représentant une installation possible du répéteur selon l'invention dans une habitation ;
- la figure 2 représente un mode de réalisation possible du répéteur selon l'invention.

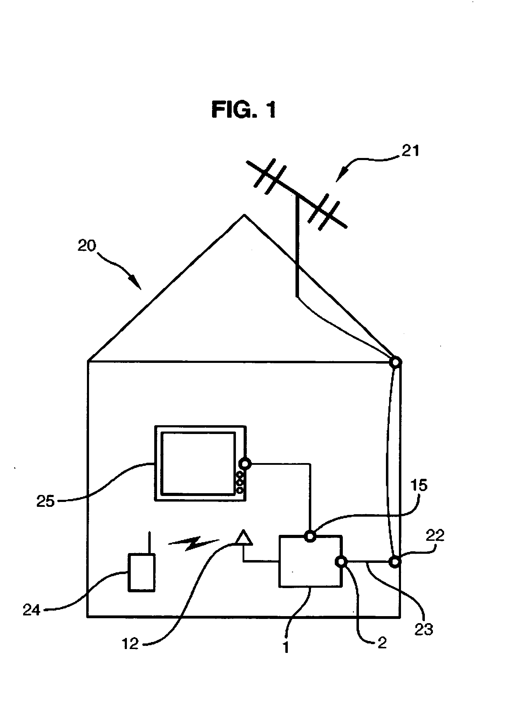

En référence à la figure 1, on a représenté une habitation 20 dotée d'une antenne râteau extérieure 21 (ici une antenne de toit) et d'une prise murale 22 sur laquelle le signal TV radiodiffusé capté par l'antenne extérieure 21 est disponible.

Le répéteur 1 selon l'invention est branché à la prise murale 22, par exemple via un câble coaxial 23.

Le répéteur 1 comprend une antenne 12 pour la réémission du signal DVB-H (occupant un canal dans la bande de fréquences UHF) à destination d'un terminal mobile 24 itinérant dans l'habitation.

Le répéteur comprend également une sortie TV auxiliaire 15 pour filtrer et relayer le signal TV issu de la prise murale 22 à un poste de réception TV 25.

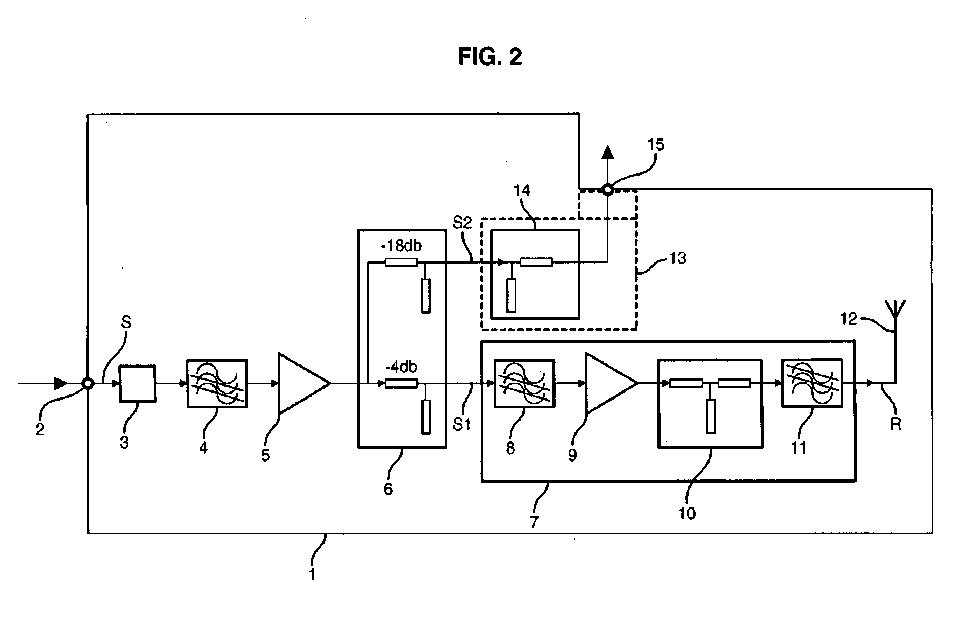

En référence à la figure 2, on a représenté un mode de réalisation possible d'un répéteur selon l'invention.

Le répéteur comprend un connecteur d'entrée 2 pour le branchement du répéteur 1 à une prise de sortie du signal radiodiffusé S.

Le connecteur est par exemple un connecteur TV pour le branchement à une prise TV murale, telle que la prise 22 sur la figure 1, notamment via un câble coaxial.

Le répéteur comprend en outre un étage de dérivation 6 du signal radiodiffusé S en un premier signal S1 sur une première voie 7 et un deuxième signal S2 sur une seconde voie 13.

A la terminaison de la première voie 7, le répéteur comprend une antenne d'émission 12 d'un signal R issu du premier signal S1 à l'intérieur de l'habitation, à destination d'un terminal mobile 24.

L'antenne 12 est par exemple une antenne large bande UHF dédiée au DVB-H. Il s'agit par exemple d'une antenne ¼ d'onde en technologie imprimée centrée à une fréquence prédéterminée (par exemple 600 MHz). Il peut également s'agir d'une antenne large bande plate et souple couvrant la bande UHF (par exemple utilisant un substrat de type mousse ferromagnétique) qui présente l'avantage d'être conformable sur tout support et de faciliter l'intégration du répéteur dans divers objets tel qu'une cadre photo numérique, ou un boitier de connexion à haut débit au réseau Internet de type « box ».

A la terminaison de la seconde voie 13, le répéteur comprend une prise de sortie 15 du second signal S2 pour le branchement du répéteur à un connecteur d'entrée d'un récepteur tel que par exemple le poste de réception 25 de la figure 1.

Conformément à l'invention, l'étage de dérivation 6 comporte un circuit séparateur de signaux de type coupleur directif assurant l'isolation entre la première voie 7 et la seconde voie 13.

Le coupleur directif est constitué de manière classiquement connue en soi par des combinaisons de résistances. Dans le cadre de l'invention, les composants sont choisis de manière à déséquilibrer fortement les deux voies en introduisant des pertes importantes.

Le coupleur directif permet d'avoir une sortie TV auxiliaire dotée d'un gain légèrement positif (1 à 2 dB) et qui surtout présente une impédance de sortie négligeable pour le reste du répéteur. Ainsi, le branchement ou non d'un récepteur sur la prise de sortie de la seconde voie n'influe en rien les caractéristiques de la première voie.

Afin que la première et seconde voies soient correctement isolées et n'interagissent pas l'une sur l'autre, le coupleur directif présente des coefficients d'atténuation importants, par exemple -18 dB sur la seconde voie et -4 dB sur la première voie.

Un tel coupleur hybride permet ainsi de n'observer aucune variation de gain sur le signal émis par l'antenne lorsque la sortie de la seconde voie est laissée à l'air (non branchée) ou est au contraire raccordée à une charge (telle qu'une charge de 75 Ω comme un poste de réception TV).

Des mesures d'adaptation réalisées sur une fenêtre de 200 MHZ centrée sur 600 MHz montrent un coefficient de réflexion sur la seconde voie de l'ordre de -8 dB à 10 dB sur la plage concernée, correspondant à un VSWR (« Voltage Standing Wave Ratio ») de 2 :1 à 2,2 :1. Cette adaptation n'est sensiblement pas modifiée selon que l'on branche la prise de sortie auxiliaire 15 sur une charge de 75 Ω ou si on la laisse en l'air.

Selon un mode de réalisation préférentiel, le répéteur comporte en outre un étage d'amplification 5 en amont de l'étage de dérivation 6. Cet étage d'amplification 5 vise notamment à compenser les effets de l'atténuation du coupleur directif, par exemple via un amplificateur à fort gain.

Le répéteur selon l'invention comporte avantageusement un étage de filtrage 4 en amont de l'étage d'amplification 5. La présence de l'étage d'amplification à ce niveau de la chaîne de traitement du signal radiodiffusé risque en effet d'amplifier le bruit et les signaux perturbateurs (une antenne TV, telle que l'antenne extérieure 21 sur la figure 1, possède effectivement une bande de réception assez large et est susceptible de capter beaucoup de signaux perturbateurs).

L'étage de filtrage 4 permet ainsi de limiter l'amplification de signaux perturbateurs et de transmettre un signal « propre » à la première voie (émission DVB-H) et à la seconde voie (sortie TV auxiliaire).

En particulier, l'étage de filtrage 4 peut être adapté pour réaliser un filtrage de type passe-bande. Il peut en particulier s'agir d'un filtrage passe-bande de fréquences de coupure 450 MHz et 740 MHZ isolant ainsi les bandes VHF (174-247 MHz) et UHF (472-862 MHz), et rejetant les autres fréquences, notamment les fréquences GSM.

L'étage de filtrage 4 peut notamment être constitué par un filtre passe-bande de type Butterworth du 3ème ordre, en particulier un filtre suffisamment performant et d'un coût limité.

Le répéteur peut par ailleurs présenter un premier étage d'adaptation d'impédance 3 après le connecteur d'entrée 2, pour réaliser par exemple une transformation d'impédance 75/50 Ω entre le connecteur d'entrée 2 type TV et le reste du répéteur.

Sur la première voie 7, le répéteur comporte un étage de filtrage et d'amplification du premier signal S1, fournissant en sortie ledit signal R issu du premier signal S1 émis par l'antenne 12 à l'intérieur de l'habitation. Cet étage de filtrage et d'amplification a pour objectif de permettre l'émission par l'antenne 12 d'un signal parfaitement « propre » et de bonne qualité avec un niveau compatible avec les terminaux mobiles.

L'étage de filtrage et d'amplification peut notamment comporter des moyens de filtrage de type passe-bande, en particulier pour isoler la bande UHF en ne conservant que la bande de fréquences 450-850 MHz. Cette bande peut être adaptée pour tenir compte des conclusions de la Conférence Mondiale des Radiocommunications 2007 (ré-affectation du spectre UHF pour des applications mobiles et limitation des services TV UHF à la fréquence de 790 MHz).

Selon un mode de réalisation préférentiel, l'étage de filtrage et d'amplification comprend un filtre passe-haut 8, disposant par exemple d'une fréquence de coupure de 450 MHz, et un filtre passe-bas 11, disposant par exemple d'une fréquence de coupure de 850 MHz, encadrant un amplificateur 9.

Un adaptateur d'impédance 10 est également prévu entre l'amplificateur 9 et le filtre passe-bas 11 afin de garantir la stabilité des performances de gain quel que soit le type de téléviseur branché en sortie.

L'étage de filtrage et d'amplification permet ainsi une bonne sélection de la bande UHF avec un gain tel que l'ensemble de la chaîne (depuis le connecteur d'entrée jusqu'à l'antenne sur la première voie) présente par exemple un gain total dans cette bande de plus de 40 dB à 600 MHz.

Sur la seconde voie 13, le répéteur peut comporter, en amont de la prise de sortie 15, un second étage d'adaptation d'impédance 14 apte par exemple à réaliser une transformation d'impédance 50/75 Ω.

On précise également que le répéteur dispose de moyens d'alimentation associant par exemple un bloc secteur 10 V et un régulateur 8 V. On retiendra que le fait d'intégrer le répéteur dans un boitier type box permet de profiter du boitier et de son alimentation, ce qui permet notamment de réduire le coût du répéteur.

## Revendications

1. Répéteur (1) pour la retransmission à l'intérieur d'une habitation d'un signal radiodiffusé (S) capté par une antenne extérieure à l'habitation (21), comprenant :
- un connecteur d'entrée (2) pour le branchement du répéteur (1) à une prise de sortie (22) sur laquelle le signal radiodiffusé (S) capté par l'antenne extérieure (21) est disponible ;
- un étage de dérivation (6) du signal radiodiffusé (S) en un premier signal (S1) sur une première voie (7) et un deuxième signal (S2) sur une seconde voie (13) ;
- sur la première voie (7), un étage de filtrage et d'amplification (8-11) du premier signal (S1) fournissant en sortie un signal (R) issu du premier signal (S1) ;
- à la terminaison de la première voie (7), une antenne d'émission (12) à destination d'un terminal mobile (24) itinérant dans l'habitation du signal (R) issu du premier signal (S1) ;
- à la terminaison de la seconde voie (13), une prise de sortie (15) du second signal pour le branchement du répéteur à un connecteur d'entrée d'un récepteur (25) ;
**caractérisé en ce que** l'étage de dérivation (3) comporte un circuit séparateur de signaux de type coupleur directif assurant l'isolation entre la première voie (7) et la seconde voie (13).

2. Répéteur selon la revendication 1, comprenant en outre un étage d'amplification (5) en amont de l'étage de dérivation (3).

3. Répéteur selon la revendication précédente, comprenant un étage de filtrage (4) en amont de l'étage d'amplification (5).

4. Répéteur selon la revendication précédente, dans lequel l'étage de filtrage (4) est adapté pour réaliser un filtrage de type passe-bande.

5. Répéteur selon la revendication précédente, dans lequel l'étage de filtrage (4) isole les bandes VHF et UHF.

6. Répéteur selon l'une des revendications précédentes, comprenant en outre un premier étage d'adaptation d'impédance (3) après le connecteur d'entrée (2).

7. Répéteur selon l'une des revendications précédentes, dans lequel l'étage de filtrage et d'amplification sur la première voie (7) comprend des moyens de filtrage de type passe-bande (8, 11).

8. Répéteur selon la revendication précédente, dans lequel les moyens de filtrage de type passe-bande (8, 11) isolent la bande UHF.

9. Répéteur selon l'une des deux revendications précédentes, dans lequel l'étage de filtrage et d'amplification comprend un filtre passe-haut (8) et un filtre passe-bas (11) encadrant un amplificateur (9).

10. Répéteur selon l'une des revendications précédentes, comprenant sur la seconde voie (13) un second étage d'adaptation d'impédance (14) en amont de la prise de sortie (15).

## Claims

1. Repeater (1) for retransmitting within a dwelling a broadcast signal (S) captured by an antenna outside the dwelling (21), comprising:
- an input connector (2) for the connection of the repeater (1) to an output terminal (22) on which the broadcast signal (S) captured by the outside antenna (21) is available;
- a stage of differentiation (6) of the broadcast signal (S) into a first signal (S1) on a first channel (7) and a second signal (S2) on a second channel (13);
- on the first channel (7), a stage of filtering and amplification (8-11) of the first signal (S1) supplying at the output a signal (R) derived from the first signal (S1);
- at the end of the first channel (7), a transmitting antenna (12) to an itinerant mobile terminal (24) in the dwelling of the signal (R) derived from the first signal (S1);
- at the end of the second channel (13), an output terminal (15) of the second signal for the connection of the repeater to an input connector of a receiver (25);
**characterised in that** the differentiation stage (3) comprises a signal separating circuit of directional coupler type ensuring the isolation between the first channel (7) and the second channel (13).

2. Repeater according to claim 1, further comprising an amplification stage (5) ahead of the differentiation stage (3).

3. Repeater according to the preceding claim, comprising a filtering stage (4) ahead of the amplification stage (5).

4. Repeater according to the preceding claim, wherein the filtering stage (4) is suited to carrying out a band pass type filtering.

5. Repeater according to the preceding claim, wherein the filtering stage (4) isolates the VHF and UHF bands.

6. Repeater according to one of the preceding claims, further comprising a first impedance adaptation stage (3) after the input connector (2).

7. Repeater according to one of the preceding claims, wherein the filtering and amplification stage on the first channel (7) comprises band pass type filtering means (8,11).

8. Repeater according to the preceding claim, wherein the band pass type filtering means (8,11) isolate the UHF band.

9. Repeater according to one of the two preceding claims, wherein the filtering and amplification stage comprises a high pass filter (8) and a low pass filter (11) flanking an amplifier (9).

10. Repeater according to one of the preceding claims, comprising on the second channel (13) a second impedance adaptation stage (14) ahead of the output terminal (15).

## Patentansprüche

1. Verstärker (1) zur Übertragung eines Rundfunksignals (S), welches von einer Antenne (21) außerhalb einer Wohnung aufgefangen wird, in das Innere der Wohnung, umfassend:
- ein Eingangsverbindungsstück (2) für den Anschluss des Verstärkers (1) an einen Ausgangsanschluss (22), auf dem das durch die Außenantenne (21) aufgefangene Rundfunksignal (S) verfügbar ist;
- eine Abzweigstufe (6) zur Abzweigung des Rundfunksignals (S) in ein erstes Signal (S1) auf einem ersten Weg (7) und ein zweites Signal (S2) auf einem zweiten Weg (13);
- auf dem ersten Weg (7), eine Filter- und Verstärkerstufe (8-11) des ersten Signals (S1), welches am Ausgang ein Signal (R) liefert, das von dem ersten Signal (S1) stammt;
- am Ende des ersten Wegs (7), eine Sendeantenne (12), welche das aus dem ersten Signal (S1) hervorgegangene Signal (R) an einen mobilen, in der Wohnung wandernden Terminal (24) sendet;
- am Ende des zweiten Wegs (13), einen Ausgangsanschluss (15) des zweiten Signals für den Anschluss des Verstärkers an ein Eingangsverbindungsstück eines Empfängers (25);
**dadurch gekennzeichnet, dass** die Abzweigstufe (3) eine Signaltrennleitung vom Richtkopplertyp aufweist, welche die Isolation zwischen dem ersten Weg (7) und dem zweiten Weg (13) sicherstellt.

2. Verstärker gemäß Anspruch 1, welcher außerdem eine Verstärkerstufe (5) stromaufwärts der Abzweigstufe (3) umfasst.

3. Verstärker gemäß dem vorhergehenden Anspruch, welcher eine Filterstufe (4) stromaufwärts der Verstärkerstufe (5) umfasst.

4. Verstärker gemäß dem vorhergehenden Anspruch, wobei die Filterstufe (4) ausgebildet ist, um ein Filtern vom Bandpasstyp durchzuführen.

5. Verstärker gemäß dem vorhergehenden Anspruch, wobei die Filterstufe (4) VHF- und UHF-Bänder isoliert.

6. Verstärker gemäß einem der vorhergehenden Ansprüche, welcher ferner eine erste Impedanzanpassungsstufe (3) hinter dem Eingangsverbindungsstück (2) umfasst.

7. Verstärker gemäß einem der vorhergehenden Ansprüche, wobei die Filter- und Verstärkerstufe auf dem ersten Weg (7) Filtermittel vom Bandpasstyp (8, 11) umfasst.

8. Verstärker gemäß dem vorhergehenden Anspruch, wobei die Filtermittel vom Bandpasstyp (8, 11) das UHF-Band isolieren.

9. Verstärker gemäß einem der beiden vorhergehenden Ansprüche, wobei die Filter- und Verstärkerstufe einen Hochpassfilter (8) und einen Tiefpassfilter (11), die einen Verstärker (9) einrahmen, umfasst.

10. Verstärker gemäß einem der vorhergehenden Ansprüche, welcher auf dem zweiten Weg (13) eine zweite Impedanzanpassungsstufe (14) stromaufwärts des Ausgangsanschlusses (15) umfasst.
